# EUROPÄISCHE PATENTSCHRIFT

(11) **EP 3 520 975 B1**
(45) Veröffentlichungstag und Bekanntmachung des Hinweises auf die Patenterteilung: **05.01.2022**
(21) Anmeldenummer: 18155346.2
(22) Anmeldetag: 06.02.2018
(51) Int. Cl.: B27B 17/08, B25F 5/00, B27B 17/00

(54) **GARTEN- UND/ODER FORSTGERÄT**
GARDEN AND/OR FOREST SYSTEM
OUTILLAGE ET MATÉRIEL DE JARDINAGE ET/OU FORESTIERS

(43) Veröffentlichungstag der Anmeldung: 07.08.2019
(73) Patentinhaber: Andreas Stihl AG & Co. KG, 71336 Waiblingen (DE)
(72) Erfinder: HUBER, Bernhard, 71570 Oppenweiler (DE); HEINZELMANN, Georg, 71364 Winnenden (DE)
(74) Vertreter: Patentanwälte Ruff, Wilhelm, Beier, Dauster & Partner mbB

(56) Entgegenhaltungen:
- EP-A1- 1 862 264
- EP-A1- 2 116 335
- EP-A1- 2 293 907
- EP-A1- 2 383 084
- EP-B1- 2 116 335
- EP-B1- 2 293 907
- WO-A1-2010/115438
- US-A1- 2002 122 707

## Beschreibung

### ANWENDUNGSGEBIET UND STAND DER TECHNIK

Die Erfindung bezieht sich auf ein Garten- und/oder Forstgerät.

Garten- und/oder Forstgeräte sind bekannt.

Die WO 2010/115438 A1 offenbart ein Gerät gemäss dem Oberbegriff des Anspruchs 1, wobei das Gerät ein batteriebetriebenes tragbares Schneidwerkzeug ist mit einem Haken, der zum Aufhängen des Schneidwerkzeugs verwendet werden kann.

### AUFGABE UND LÖSUNG

Der Erfindung liegt als Aufgabe die Bereitstellung eines Garten- und/oder Forstgeräts zugrunde, das verbesserte Eigenschaften aufweist und somit benutzerfreundlicher ist.

Die Erfindung löst die Aufgabe durch die Bereitstellung eines Garten- und/oder Forstgeräts mit den Merkmalen des Anspruchs 1. Vorteilhafte Weiterbildungen und/oder Ausgestaltungen der Erfindung sind in den abhängigen Ansprüchen beschrieben.

Das erfindungsgemäße Garten- und/oder Forstgerät weist ein Trägerelement auf. Das Trägerelement trägt eine Öse. Die Öse ist zur Einbindung, insbesondere zur Befestigung, eines Gerätesicherungselements ausgebildet. Des Weiteren weist das Garten- und/oder Forstgerät eine Elementaufnahme auf. Das Trägerelement und die Elementaufnahme sind dazu ausgebildet, dass das Trägerelement entweder in einer ersten Drehstellung oder in einer von der ersten verschiedenen, zweiten Drehstellung in der Elementaufnahme aufgenommen ist und durch einen Formschluss mit der Elementaufnahme gegen Drehung gesichert ist.

Das Garten- und/oder Forstgerät beziehungsweise die verschiedenen Drehstellungen des Trägerelements ermöglichen verschiedene Ausrichtungen der Öse. Insbesondere ermöglicht der Formschluss eine einfache und zugleich zuverlässige, insbesondere sichere, Ausrichtung der Öse. Somit kann ein Garten- und/oder Forstarbeiter, insbesondere ein Baumkletterer, das Garten- und/oder Forstgerät und das Gerätesicherungselement nach Belieben zueinander ausgerichtet miteinander verbinden. Insbesondere kann der Garten- und/oder Forstarbeiter die Drehstellung des Trägerelements und somit die Ausrichtung der Öse derart wählen, dass er eine mit dem Garten- und/oder Forstgerät auszuführende Arbeit möglichst durch das Gerätesicherungselement unbehindert beziehungsweise ungestört ausführen kann. Somit ist das Garten- und/oder Forstgerät benutzerfreundlich.

Insbesondere kann das Garten- und/oder Forstgerät als ein benutzerbetätigbares und/oder handgetragenes Garten- und/oder Forstgerät ausgebildet sein. Handgetragenes Gartenund/oder Forstgerät kann bedeuten, dass das Garten- und/oder Forstgerät eine maximale Masse von 50 Kilogramm (kg), insbesondere von 20 kg, insbesondere von 10 kg, aufweisen kann.

Das Trägerelement kann als eine Trägerplatte ausgebildet sein.

Die Öse kann eine Halteöse, eine Einhängeöse, ein Auge, ein Ring, ein Bügel oder eine Schlinge aufweisen oder sein. Insbesondere kann die Öse geschlossen ausgebildet sein. Des Weiteren kann ein, insbesondere mittlerer, Durchmesser der Öse im Bereich von 1 Zentimeter (cm) bis 10 cm sein beziehungsweise liegen, insbesondere von 2 cm bis 5 cm. Außerdem kann die Öse teilweise oder sogar vollständig aus Metall bestehen.

Die Öse kann von dem Trägerelement verschieden sein. Des Weiteren kann die Öse mit dem Trägerelement, insbesondere mit einem Randbereich des Trägerelements, verbunden sein, insbesondere an beziehungsweise auf dem Trägerelement befestigt sein. Insbesondere kann die Öse in Bezug auf das Trägerelement mindestens um eine Normale beziehungsweise eine Senkrechte auf einer durch das Trägerelement definierten Ebene drehfest sein.

Das Gerätesicherungselement kann ein Strop, ein Seil, ein Band, eine Schnur, ein Sicherungsring, ein Karabiner oder ein Bestandteil einer Kletterausrüstung, insbesondere eines Klettergurts, sein.

Die zweite Drehstellung kann sich von der ersten Drehstellung durch eine Drehung beziehungsweise eine Rotation des Trägerelements um die Normale auf der durch das Trägerelement beziehungsweise die Elementaufnahme definierten Ebene und/oder um eine Längsachse des Garten- und/oder Forstgeräts unterscheiden. Insbesondere kann das Trägerelement von der ersten Drehstellung in die zweite Drehstellung durch, insbesondere nur, Drehung beziehungsweise Rotation überführt werden.

In der Elementaufnahme aufgenommen sein kann bedeuten, dass ein unmittelbarer und/oder direkter Kontakt mit der Elementaufnahme bestehen kann.

Das Trägerelement kann nur beziehungsweise ausschließlich durch den Formschluss mit der Elementaufnahme gegen Drehung gesichert sein. In anderen Worten: das Trägerelement braucht nicht durch einen Kraftschluss und/oder einen Stoffschluss mit der Elementaufnahme gegen Drehung gesichert sein. Insbesondere kann der Formschluss mit der Elementaufnahme eine, insbesondere ungewollte, Überführung des Trägerelements von der ersten Drehstellung in die zweite Drehstellung und/oder von der zweiten Drehstellung in die erste Drehstellung sperren beziehungsweise verhindern. Anders formuliert: der Formschluss kann durch ein Ineinandergreifen des Trägerelements und der Elementaufnahme entstehen. In anderen Worten: bei dem Formschluss kann die Elementaufnahme dem Trägerelement im Weg sein beziehungsweise stehen.

Eine Grundform der Elementaufnahme und/oder eine Grundform des Trägerelements können/kann die verschiedenen Drehstellungen definieren. Des Weiteren kann eine Form, insbesondere eine Außenform, des Trägerelements zu einer Form, insbesondere einer Innenform, der Elementaufnahme korrespondieren, insbesondere zu dieser komplementär sein.

Insbesondere können mehr als zwei verschiedene Drehstellungen vorgesehen sein, insbesondere drei verschiedene Drehstellungen, insbesondere vier verschiedene Drehstellungen oder mehr als vier verschiedene Drehstellungen.

In einer Weiterbildung der Erfindung sind die erste Drehstellung und die zweite Drehstellung durch einen Drehwinkel von mindestens 45 Grad (°) verschieden. Insbesondere kann der Drehwinkel mindestens 60°, mindestens 90°, insbesondere 90°, mindestens 135° oder 180° sein beziehungsweise betragen.

In einer Weiterbildung der Erfindung ist eine Grundform der Elementaufnahme und/oder des Trägerelements drehsymmetrisch und/oder punktsymmetrisch und/oder achsensymmetrisch. Insbesondere drehsymmetrisch um die Normale auf der durch das Trägerelement beziehungsweise die Elementaufnahme definierte Ebene und/oder punktsymmetrisch zu einem Punkt, insbesondere einem Mittelpunkt des Trägerelements beziehungsweise der Elementaufnahme und/oder achsensymmetrisch zu mindestens einer Achse in der Ebene. Die Grundform kann ein Rechteck, insbesondere ein Quadrat, aufweisen oder sein.

In einer Weiterbildung der Erfindung sind das Trägerelement und die Elementaufnahme zur Verbindung, insbesondere miteinander, durch einen, insbesondere denselben, Formschluss ausgebildet. Dies ermöglicht eine einfache und zugleich zuverlässige Verbindung. Insbesondere kann der Formschluss eine Doppelfunktion, nämlich Sicherung gegen Drehung sowie Verbindung, aufweisen beziehungsweise haben. In anderen Worten: das Trägerelement braucht nicht durch einen Kraftschluss und/oder einen Stoffschluss mit der Elementaufnahme verbunden zu sein.

In einer Weiterbildung der Erfindung weist die Elementaufnahme eine, insbesondere umlaufende, Nut auf. Die Nut ist dazu ausgebildet, das Trägerelement aufzunehmen. In anderen Worten: das Trägerelement kann zum Einsetzen in die Nut hinein ausgebildet sein. Insbesondere kann die Nut dem Trägerelement im Weg sein.

Das Garten- und/oder Forstgerät kann ein Gerätegehäuse aufweisen. Das Gerätegehäuse kann die Elementaufnahme aufweisen. Zusätzlich kann das Garten- und/oder Forstgerät ein Trägersicherungselement aufweisen, wobei das Trägersicherungselement zur, insbesondere axialen, Sicherung des Trägerelements in der Elementaufnahme gegen Lösung aus der Elementaufnahme ausgebildet sein kann, insbesondere entlang der Normalen und/oder der Längsachse. Insbesondere kann das Trägersicherungselement zur, insbesondere zerstörungsfrei, lösbaren Befestigung an dem Gerätegehäuse beziehungsweise der Elementaufnahme ausgebildet sein. Des Weiteren kann das Trägerelement durch mindestens einen Formschluss mit der Elementaufnahme und/oder dem, insbesondere befestigten, Trägersicherungselement gegen Lösung aus der Elementaufnahme gesichert sein.

Zusätzlich oder alternativ kann das Garten- und/oder Forstgerät ein Gerätegehäuse und ein von dem Gerätegehäuse verschiedenes Elementaufnahmeteil mit der Elementaufnahme aufweisen. Zusätzlich kann das Gerätegehäuse ein Trägersicherungselement aufweisen, wobei das Trägersicherungselement zur, insbesondere axialen, Sicherung des Trägerelements in der Elementaufnahme gegen Lösung aus der Elementaufnahme ausgebildet sein kann, insbesondere entlang der Normalen und/oder der Längsachse. Insbesondere kann das Elementaufnahmeteil zur, insbesondere zerstörungsfrei, lösbaren Befestigung an dem Gerätegehäuse beziehungsweise dem Trägersicherungselement ausgebildet sein. Des Weiteren kann das Trägerelement durch mindestens einen Formschluss mit dem, insbesondere befestigten, Elementaufnahmeteil beziehungsweise der Elementaufnahme und/oder dem Gerätegehäuse beziehungsweise dem Trägersicherungselement gegen Lösung aus der Elementaufnahme gesichert sein.

In einer Weiterbildung der Erfindung weist das Garten- und/oder Forstgerät ein Gerätegehäuse mit einem ersten Gehäuseteil und einem zweiten Gehäuseteil auf. Die Elementaufnahme weist eine erste Aufnahme an dem ersten Gehäuseteil und eine zweite Aufnahme an dem zweiten Gehäuseteil auf. Das erste Gehäuseteil und das zweite Gehäuseteil sind zwischen einem geschlossenen Zustand und einem geöffneten Zustand, insbesondere zerstörungsfrei, veränderbar ausgebildet. In dem geschlossenen Zustand ist das Trägerelement in der ersten Aufnahme und der zweiten Aufnahme aufgenommen und durch den Formschluss mit der ersten Aufnahme und der zweiten Aufnahme gegen Drehung gesichert. In dem geöffneten Zustand weist die erste Aufnahme oder die zweite Aufnahme zur Drehung des Trägerelements mit dem Trägerelement keinen Formschluss auf.

Der geöffnete Zustand ermöglicht das Trägerelement zur Drehung freizugeben. Insbesondere kann der geöffnete Zustand ein einfaches Entnehmen beziehungsweise Herausschieben des Trägerelements aus der Aufnahme heraus, insbesondere aus der ersten oder der zweiten Aufnahme heraus, oder ein einfaches Einsetzen beziehungsweise Einschieben des Trägerelements, insbesondere in der gewünschten Drehstellung, in die Aufnahme hinein ermöglichen, insbesondere in die erste oder die zweite Aufnahme hinein. Die zweite Drehstellung kann sich von der ersten Drehstellung durch eine Drehung des Trägerelements um eine Längsachse des Gerätegehäuses unterscheiden.

Zusätzlich kann der geöffnete Zustand einen Zugang zu einem, insbesondere im geschlossenen Zustand, Inneren des Garten- und/oder Forstgeräts beziehungsweise seines Gerätegehäuses für eine Wartung oder eine Reparatur des Garten- und/oder Forstgeräts ermöglichen. Insbesondere kann das Garten- und/oder Forstgerät einen Antriebsmotor aufweisen, wobei der Antriebsmotor innerhalb des Gerätegehäuses teilweise oder sogar vollständig angeordnet sein kann. Der Antriebsmotor kann ein, insbesondere akkugespeister, Elektromotor oder ein Verbrennungsmotor sein.

Insbesondere kann im geschlossenen Zustand das Trägerelement nicht aus der Aufnahme heraus entnommen oder in die Aufnahme hinein eingesetzt werden. Weiter kann das erste Gehäuseteil und/oder das zweite Gehäuseteil dem Trägerelement im Weg sein.

Das zweite Gehäuseteil kann von dem ersten Gehäuseteil verschieden sein. Das Gerätegehäuse kann als zweiteiliges Gerätegehäuse bezeichnet werden. Die zweite Aufnahme kann von der ersten Aufnahme verschieden sein. Insbesondere kann die erste Aufnahme eine erste Nut aufweisen und/oder die zweite Aufnahme kann eine zweite Nut aufweisen. Das erste Gehäuseteil und das zweite Gehäuseteil können zur Veränderung zwischen dem geschlossenen Zustand und dem geöffneten Zustand ausgebildet sein. Der geöffnete Zustand kann von dem geschlossenen Zustand verschieden sein.

Zur Sicherung des geschlossenen Zustands gegen Veränderung in den geöffneten Zustand kann das Garten- und/oder Forstgerät eine Gehäusesicherung aufweisen, wobei die Gehäusesicherung zur Sicherung, insbesondere zur Verbindung, des ersten Gehäuseteils und des zweiten Gehäuseteils gegen Öffnen ausgebildet sein kann. Insbesondere kann die Gehäusesicherung einen Schraubverbinder aufweisen oder sein. Die Gehäusesicherung kann, insbesondere zerstörungsfrei, lösbar zur Veränderung des geschlossenen Zustands in den geöffneten Zustand ausgebildet sein.

In einer Weiterbildung der Erfindung weist das Garten- und/oder Forstgerät ein Werkzeug auf. Das Werkzeug ist an einer Werkzeugseite des Garten- und/oder Forstgeräts angeordnet beziehungsweise erstreckt sich von und/oder zu der Werkzeugseite. Die Elementaufnahme ist an einer der Werkzeugseite gegenüberliegenden Aufnahmeseite des Garten- und/oder Forstgeräts angeordnet. Dies ermöglicht ein Risiko einer Behinderung beziehungsweise einer Störung des Werkzeugs durch das Gerätesicherungselement zu reduzieren oder sogar zu verhindern. Insbesondere kann die Werkzeugseite eine Seite des Garten- und/oder Forstgeräts sein, an der ein Gegenstand, insbesondere ein Baum, mit dem Garten- und/oder Forstgerät bearbeitet wird, insbesondere eine Vorderseite. Das Werkzeug kann in beziehungsweise innerhalb des Gerätegehäuses, soweit vorhanden, befestigt sein und sich von dort zu der Werkzeugseite nach Außen erstrecken. Die Aufnahmeseite kann der Werkzeugseite abgewandt und/oder von der Werkzeugseite, insbesondere maximal, entfernt sein, insbesondere eine Rückseite.

In einer Weiterbildung der Erfindung ist das Garten- und/oder Forstgerät eine Säge, insbesondere eine Kettensäge, eine Schere, insbesondere eine Astschere, und/oder ein Schneider, insbesondere ein Astschneider. Insbesondere kann das Garten- und/oder Forstgerät einen Antriebsmotor aufweisen. Der Antriebsmotor kann ein, insbesondere akkugespeister, Elektromotor oder ein Verbrennungsmotor sein.

In einer Weiterbildung der Erfindung sind das Trägerelement und die Öse zur, insbesondere zerstörungsfreien, Verstellung der Öse zwischen einer Einbindelage und einer Verstaulage ausgebildet. In der Einbindelage steht die Öse von dem Trägerelement zur Einbindung des Gerätesicherungselements ab. In der Verstaulage liegt die Öse an dem Trägerelement an. Die Einbindelage ermöglicht eine einfache Einbindung des Gerätesicherungselements. Die Verstaulage ermöglicht eine Behinderung beziehungsweise eine Störung durch die Öse, insbesondere wenn die Öse nicht benötigt wird, zu reduzieren oder sogar zu verhindern. In anderen Worten: in der Verstaulage kann die Öse, insbesondere platzsparend, aufgeräumt sein. Insbesondere kann die Öse in der Verstaulage dem Trägerelement näher als in der Einbindelage sein. Das Trägerelement und/oder die Öse können/kann eine Anlenkung, insbesondere ein Schwenkgelenk, aufweisen, wobei die Anlenkung die Öse mit dem Trägerelement verbinden kann, insbesondere die Öse an dem Trägerelement befestigen kann, und/oder zur Verstellung, insbesondere zur Verschwenkung, der Öse zwischen der Einbindelage und der Verstaulage ausgebildet sein kann.

In einer Ausgestaltung der Erfindung weist das Trägerelement ein Feststellelement auf. Das Feststellelement ist dazu ausgebildet, die Öse in der Einbindelage zu fixieren. Dies ermöglicht ein Risiko einer ungewollten beziehungsweise unbeabsichtigten Verstellung der Öse von der Einbindelage in die Verstaulage zu reduzieren oder sogar zu verhindern. Insbesondere kann das Feststellelement dazu ausgebildet sein, die Öse in der Einbindelage derart zu verspannen oder zu deformieren, dass die Öse in der Einbindelage fixiert sein kann. Des Weiteren kann das Feststellelement dazu ausgebildet sein, bei Erreichung oder Überschreitung eines Kraftgrenzwerts eine Verstellung der Öse von der Einbindelage in die Verstaulage und/oder von der Verstaulage in die Einbindelage freizugeben. Der Kraftgrenzwert kann mindestens 1 Newton sein, insbesondere mindestens 5 Newton.

In einer Ausgestaltung der Erfindung weist das Trägerelement eine Griffmuschel auf. Die Griffmuschel umgibt die Öse in der Verstaulage zumindest teilweise, insbesondere vollständig. Dies ermöglicht dem Garten- und/oder Forstarbeiter die Öse, insbesondere wenn die Öse in die Verstaulage verstellt ist, einfach zu ergreifen, insbesondere zur Verstellung in die Einbindelage. Insbesondere kann die Griffmuschel eine halbrunde und/oder geriffelte Muschelform aufweisen.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind. Dabei zeigen:
- Fig. 1: eine schematische Seitenansicht eines erfindungsgemäßen Garten- und/oder Forstgeräts,
- Fig. 2: eine Perspektivansicht eines Ausschnitts des Garten- und/oder Forstgeräts der Fig. 1 mit einem Trägerelement in einer ersten Drehstellung mit einer Öse in einer Verstaulage,
- Fig. 3: eine Rückansicht des Garten- und/oder Forstgeräts der Fig. 2,
- Fig. 4: eine Vergrößerung eines Ausschnitts des Garten- und/oder Forstgeräts der Fig. 2,
- Fig. 5: eine geschnittene Seitenansicht eines Ausschnitts des Garten- und/oder Forstgeräts der Fig. 2,
- Fig. 6: eine weitere Perspektivansicht eines Ausschnitts des Garten- und/oder Forstgeräts der Fig. 1 mit der Öse in einer Einbindelage,
- Fig. 7: eine geschnittene Seitenansicht eines Ausschnitts des Garten- und/oder Forstgeräts der Fig. 6,
- Fig. 8: eine weitere Perspektivansicht eines Ausschnitts des Garten- und/oder Forstgeräts der Fig. 1 mit dem Trägerelement in einer zweiten Drehstellung mit der Öse in der Verstaulage,
- Fig. 9: eine geschnittene Seitenansicht eines Ausschnitts des Garten- und/oder Forstgeräts der Fig. 8,
- Fig. 10: eine weitere Perspektivansicht eines Ausschnitts des Garten- und/oder Forstgeräts der Fig. 1 mit dem Trägerelement in der zweiten Drehstellung mit der Öse in der Einbindelage,
- Fig. 11: eine geschnittene Seitenansicht eines Ausschnitts des Garten- und/oder Forstgeräts der Fig. 10,
- Fig. 12: eine weitere Perspektivansicht eines Ausschnitts des Garten- und/oder Forstgeräts der Fig. 1 mit dem Trägerelement in einer dritten Drehstellung mit der Öse in der Verstaulage,
- Fig. 13: eine weitere Perspektivansicht eines Ausschnitts des Garten- und/oder Forstgeräts der Fig. 1 mit dem Trägerelement in der dritten Drehstellung mit der Öse in der Einbindelage,
- Fig. 14: eine weitere Perspektivansicht eines Ausschnitts des Garten- und/oder Forstgeräts der Fig. 1 mit dem Trägerelement in einer vierten Drehstellung mit der Öse in der Verstaulage,
- Fig. 15: eine weitere Perspektivansicht eines Ausschnitts des Garten- und/oder Forstgeräts der Fig. 1 mit dem Trägerelement in der vierten Drehstellung mit der Öse in der Einbindelage, und
- Fig. 16: eine geschnittene Seitenansicht eines erfindungsgemäßen Garten- und/oder Forstgeräts.

### DETAILLIERTE BESCHREIBUNG DER AUSFÜHRUNGSBEISPIELE

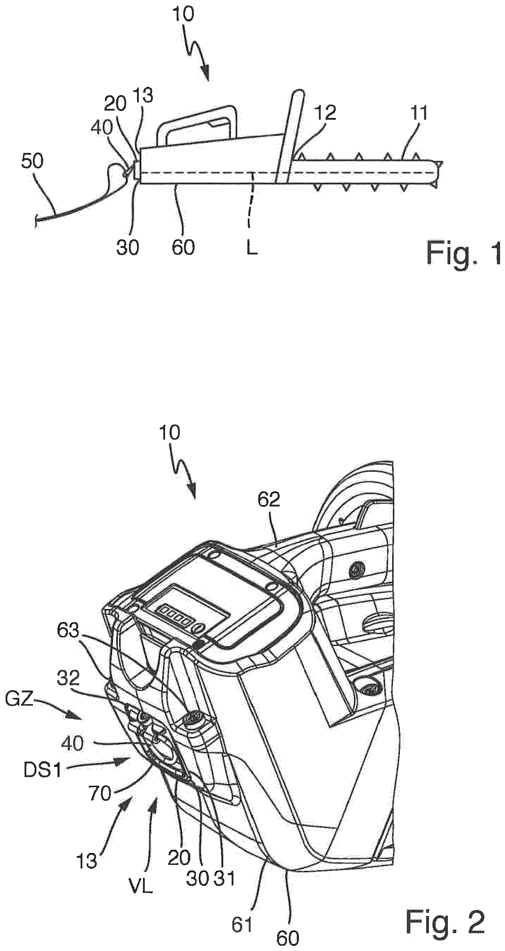

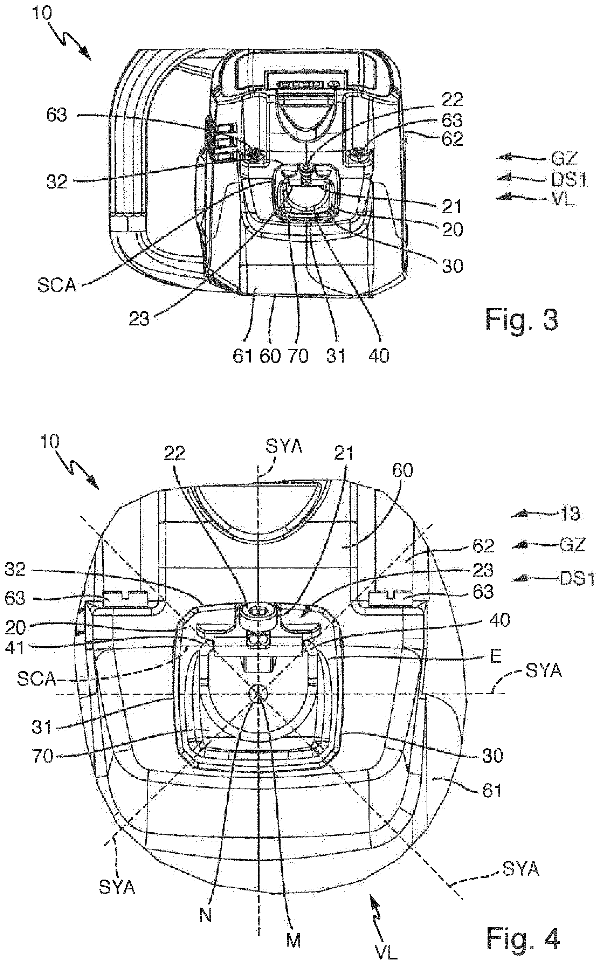

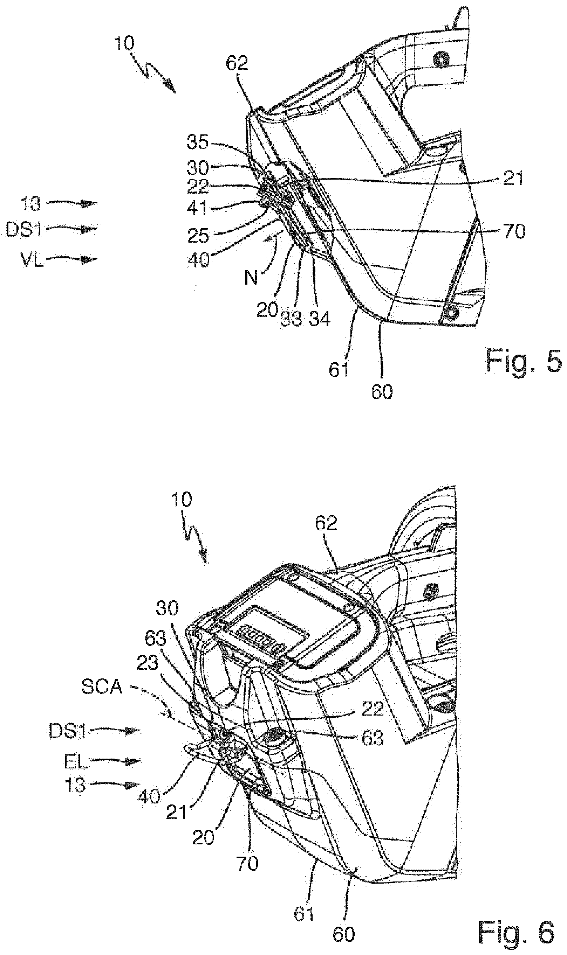

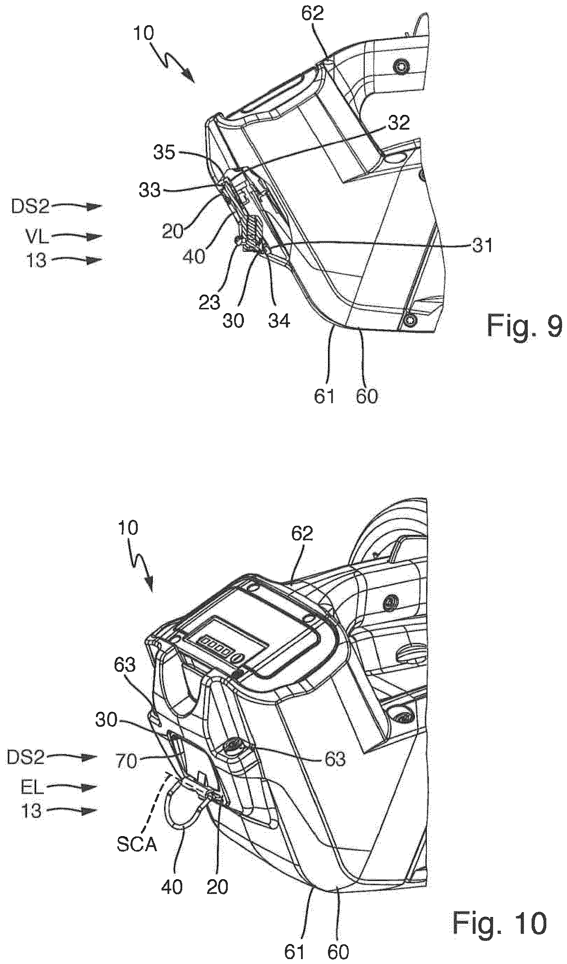

Fig. 1 bis 15 zeigen ein erfindungsgemäßes Garten- und/oder Forstgerät 10. Das Gartenund/oder Forstgerät 10 weist ein Trägerelement 20 auf. Das Trägerelement 20 trägt eine Öse 40, insbesondere in Form eines geschlossenen Rings. Die Öse 40 ist zur Einbindung eines Gerätesicherungselements 50 ausgebildet. Des Weiteren weist das Garten- und/oder Forstgerät 10 eine Elementaufnahme 30 auf. Das Trägerelement 20 und die Elementaufnahme 30 sind dazu ausgebildet, dass das Trägerelement 20 entweder in einer ersten Drehstellung DS1 oder in einer von der ersten verschiedenen, zweiten Drehstellung DS2 in der Elementaufnahme 30 aufgenommen ist und durch einen Formschluss mit der Elementaufnahme 30 gegen Drehung gesichert ist, insbesondere gegen Drehung in die andere Drehstellung.

Zusätzlich sind das Trägerelement 20 und die Elementaufnahme 30 zur Verbindung miteinander durch einen, insbesondere denselben Formschluss, ausgebildet, im gezeigten Ausführungsbeispiel durch den Formschluss verbunden.

Das Garten- und/oder Forstgerät 10 beziehungsweise die verschiedenen Drehstellungen DS1, DS2 des Trägerelements 20 ermöglichen verschiedene Ausrichtungen der Öse 40.

Im gezeigten Ausführungsbeispiel sind das Trägerelement 20 und die Elementaufnahme 30 dazu ausgebildet, dass das Trägerelement 20 entweder in der ersten Drehstellung DS1 oder in der zweiten Drehstellung DS2 oder in einer dritten Drehstellung DS3 oder in einer vierten Drehstellung DS4 in der Elementaufnahme 30 aufgenommen ist und durch einen Formschluss mit der Elementaufnahme 30 gegen Drehung gesichert ist, insbesondere gegen Drehung in die anderen Drehstellungen. In alternativen Ausführungsbeispielen können nur zwei, drei oder mehr als vier Drehstellungen vorgesehen sein.

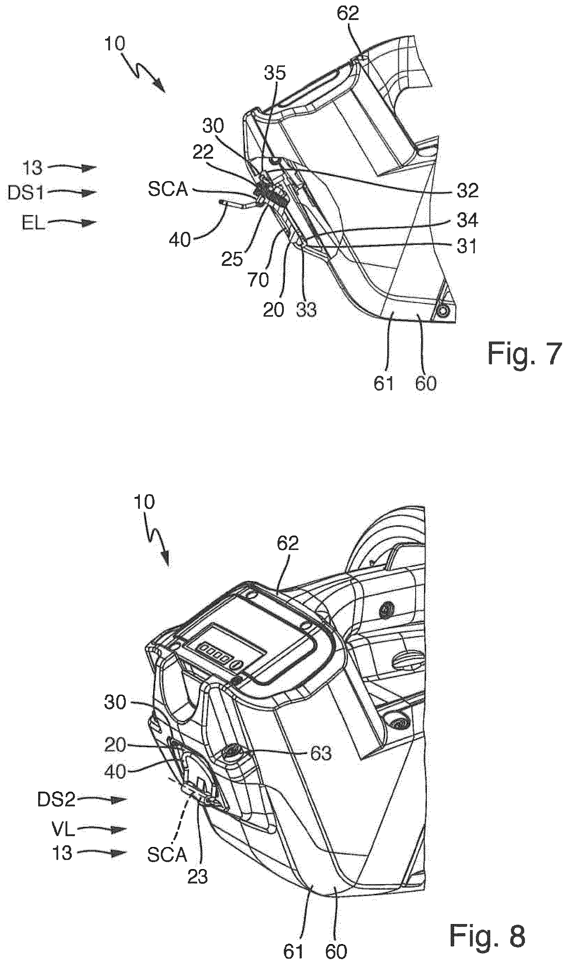

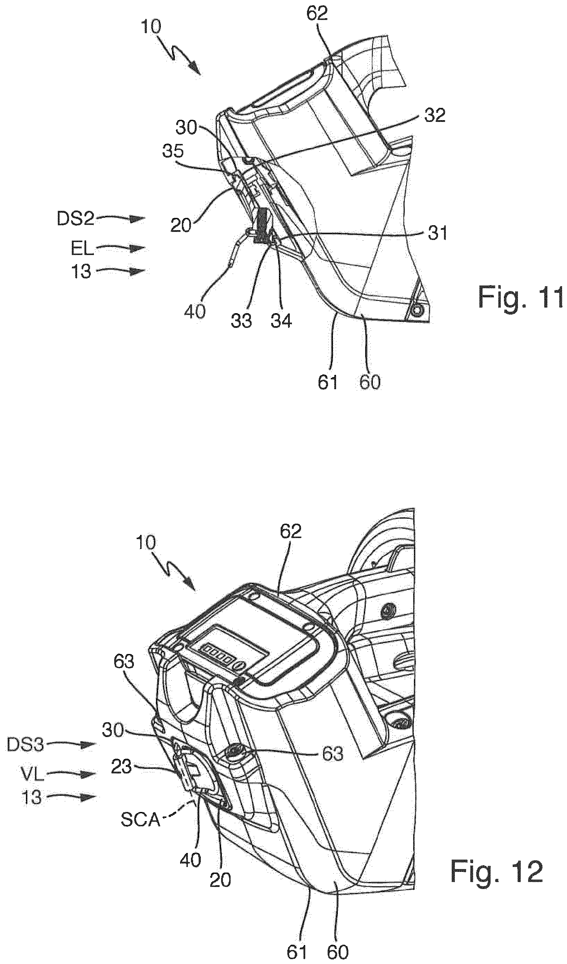

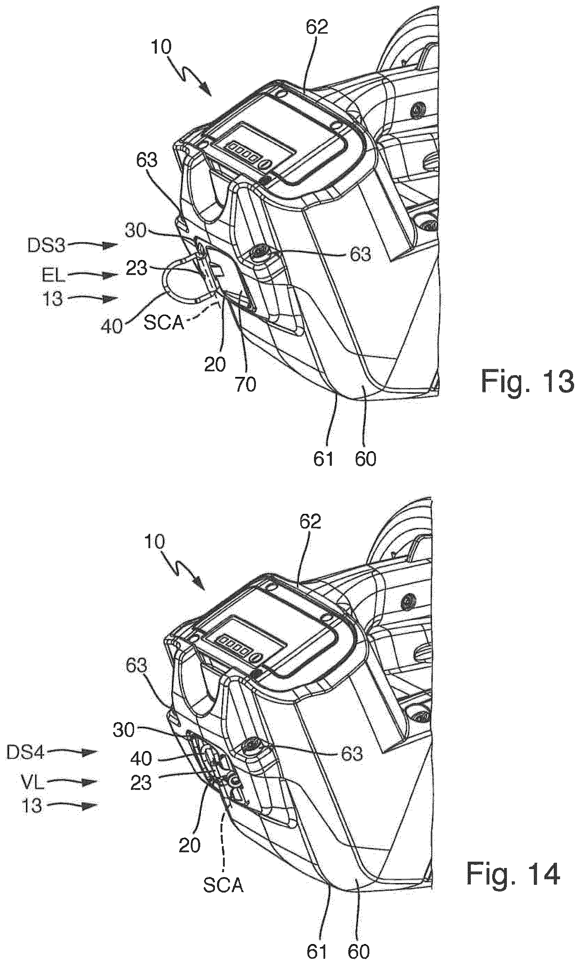

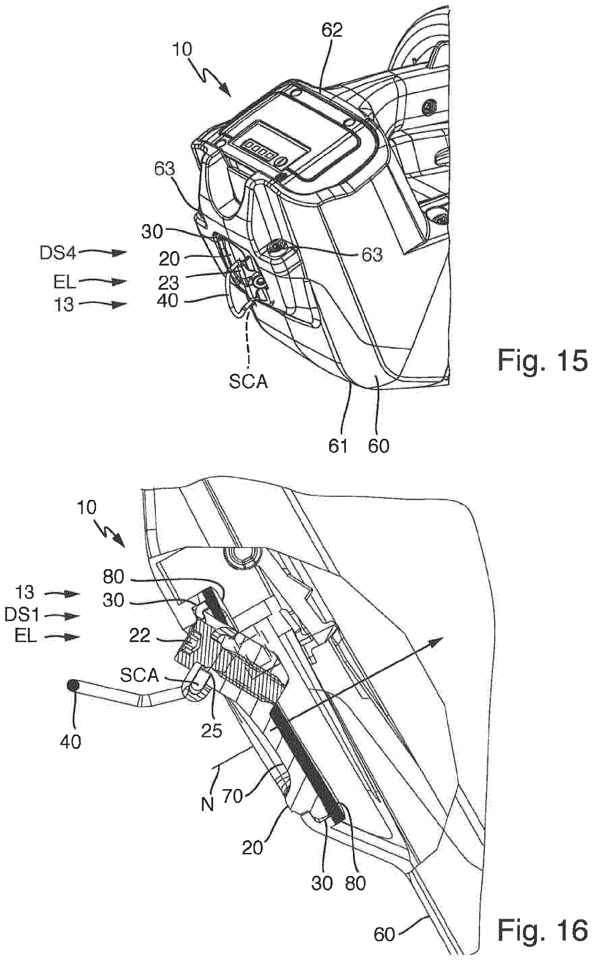

In Fig. 1 bis 7 ist das Trägerelement 20 in der ersten Drehstellung DS1 gezeigt, insbesondere mit der Öse 40 nach oben ausgerichtet. In Fig. 8 bis 11 ist das Trägerelement 20 in der zweiten Drehstellung DS2 gezeigt, insbesondere mit der Öse 40 nach unten ausgerichtet. In Fig. 12 und 13 ist das Trägerelement 20 in der dritten Drehstellung DS3 gezeigt, insbesondere mit der Öse 40 nach links ausgerichtet. In Fig. 14 und 15 ist das Trägerelement 20 in der vierten Drehstellung DS4 gezeigt, insbesondere mit der Öse 40 nach rechts ausgerichtet.

Im Detail unterscheiden die Drehstellungen DS1, DS2, DS3, DS4 sich durch eine Drehung, insbesondere durch einen Drehwinkel, des Trägerelements 20 um eine Normale N auf einer durch das Trägerelement 20 beziehungsweise die Elementaufnahme 30 definierten Ebene E beziehungsweise um eine Längsachse L des Garten- und/oder Forstgeräts 10.

Im gezeigten Ausführungsbeispiel sind die erste Drehstellung DS1 und die zweite Drehstellung DS2 durch einen Drehwinkel von mindestens 45°, insbesondere von 180°, verschieden. Des Weiteren sind die erste Drehstellung DS1 und die dritte Drehstellung DS3 durch einen Drehwinkel von, insbesondere minus, 90° verschieden. Außerdem sind die erste Drehstellung DS1 und die vierte Drehstellung DS4 durch einen Drehwinkel von, insbesondere plus, 90° verschieden.

Im Detail definiert eine Grundform, insbesondere eine Innenform, der Elementaufnahme 30 beziehungsweise eine Grundform, insbesondere eine Außenform, des Trägerelements 20 die verschiedenen Drehstellungen.

Im gezeigten Ausführungsbeispiel sind die Grundform der Elementaufnahme 30 und die Grundform des Trägerelements 20 drehsymmetrisch, insbesondere um die Normale N. Des Weiteren sind die Grundform der Elementaufnahme 30 und die Grundform des Trägerelements 20 punktsymmetrisch, insbesondere um einen Mittelpunkt M der Elementaufnahme 30 beziehungsweise des Trägerelements 20. Außerdem sind die Grundform der Elementaufnahme 30 und die Grundform des Trägerelements 20 achsensymmetrisch, insbesondere zu mindestens einer Symmetrieachse SYA in der Ebene E, insbesondere zu vier Symmetrieachsen SYA. In alternativen Ausführungsbeispielen kann die Grundform der Elementaufnahme und/oder des Trägerelements entweder drehsymmetrisch oder punktsymmetrisch oder achsensymmetrisch sein. Im gezeigten Ausführungsbeispiel ist die Grundform ein Quadrat.

Insbesondere korrespondiert die Außenform des Trägerelements 20 zu der Innenform der Elementaufnahme 30.

Im Detail weist die Elementaufnahme 30 eine, insbesondere umlaufende, Nut 33 auf. Die Nut 33 ist dazu ausgebildet, das Trägerelement 20 aufzunehmen. Im gezeigten Ausführungsbeispiel ist das Trägerelement 20 in der Nut 33 aufgenommen beziehungsweise eingesetzt, insbesondere in jeweils einer der verschiedenen Drehstellungen. Insbesondere korrespondiert die Außenform des Trägerelements 20 zu der Innenform der Nut 33.

Des Weiteren weist das Garten- und/oder Forstgerät 10 ein Gerätegehäuse 60 mit einem ersten Gehäuseteil 61 und einem zweiten Gehäuseteil 62 auf. Die Elementaufnahme 30 weist eine erste Aufnahme 31 an dem ersten Gehäuseteil 61 und eine zweite Aufnahme 32 an dem zweiten Gehäuseteil 62 auf. Das erste Gehäuseteil 61 und das zweite Gehäuseteil 62 sind zwischen einem geschlossenen Zustand GZ und einem geöffneten Zustand veränderbar ausgebildet. In dem geschlossenen Zustand GZ ist das Trägerelement 20 in der ersten Aufnahme 31 und der zweiten Aufnahme 32 aufgenommen und durch den Formschluss mit der ersten Aufnahme 31 und der zweiten Aufnahme 32 gegen Drehung gesichert. In dem geöffneten Zustand weist die erste Aufnahme 31 oder die zweite Aufnahme 32 zur Drehung des Trägerelements 20 mit dem Trägerelement 20 keinen Formschluss auf.

Im Detail kann im geschlossenen Zustand GZ das Trägerelement 20 nicht aus der Elementaufnahme 30 heraus entnommen oder nicht in die Elementaufnahme 30 hinein eingesetzt werden. Im geöffneten Zustand kann das Trägerelement 20 aus der ersten Aufnahme 31 oder der zweiten Aufnahme 32 heraus entnommen oder in die erste Aufnahme 31 oder in die zweite Aufnahme 32 hinein eingesetzt werden, insbesondere in jeweils einer der verschiedenen Drehstellungen.

Im gezeigten Ausführungsbeispiel weist das Garten- und/oder Forstgerät eine Gehäusesicherung 63 auf, insbesondere mit zwei Gehäuseschrauben. Die Gehäusesicherung 63 ist zur, insbesondere lösbaren, Sicherung, insbesondere zur Verbindung, des ersten Gehäuseteils 61 und des zweiten Gehäuseteils 62 gegen Öffnen ausgebildet. Das Gerätegehäuse 60 kann von dem geschlossenen Zustand GZ in den geöffneten Zustand überführt werden, indem die Gehäusesicherung 63 gelöst wird und das Gerätegehäuse 60 geöffnet wird, insbesondere das erste Gehäuseteil 61 und das zweite Gehäuseteil 62 voneinander entfernt werden.

Des Weiteren weist im gezeigten Ausführungsbeispiel die Nut 33 einen ersten Nutabschnitt 34 und einen zweiten Nutabschnitt 35 auf. Die erste Aufnahme 31 weist den ersten Nutabschnitt 34 auf. Die zweite Aufnahme 32 weist den zweiten Nutabschnitt 35 auf.

Außerdem ist im gezeigten Ausführungsbeispiel das Garten- und/oder Forstgerät 10 eine Säge, insbesondere eine Tophandle-Motorsäge.

Das Garten- und/oder Forstgerät 10 weist ein Werkzeug 11 auf, im gezeigten Ausführungsbeispiel eine Sägekette. Das Werkzeug 11 ist an einer Werkzeugseite 12 des Garten- und/oder Forstgeräts 10 beziehungsweise seines Gerätegehäuses 60 angeordnet. Die Elementaufnahme 30 ist an einer der Werkzeugseite 12 gegenüberliegenden Aufnahmeseite 13 des Garten- und/oder Forstgeräts 10 beziehungsweise seines Gerätegehäuses 60 angeordnet.

In alternativen Ausführungsbeispielen kann das Garten- und/oder Forstgerät eine Schere, insbesondere eine Astschere, und/oder ein Schneider, insbesondere ein Astschneider, sein. Weiter kann in alternativen Ausführungsbeispielen das Werkzeug mindestens eine oder zwei Schneiden aufweisen oder sein, insbesondere Scherenschneiden.

Zudem sind das Trägerelement 20 und die Öse 40 zur Verstellung der Öse 40 zwischen einer Einbindelage EL und einer Verstaulage VL ausgebildet. In der Einbindelage EL steht die Öse 40 von dem Trägerelement 20 zur Einbindung des Gerätesicherungselements 50 ab, wie in Fig. 1, 6, 7, 10, 11, 13 und 15 gezeigt. In der Verstaulage VL liegt die Öse 40 an dem Trägerelement 20 an, wie in Fig. 2 bis 5, 8, 9, 12 und 14 gezeigt.

Im Detail ist die Öse 40, insbesondere ein Ösenschwenkabschnitt 41, mit dem Trägerelement 20 verbunden, insbesondere mit einem Randbereich des Trägerelements 20. Im gezeigten Ausführungsbeispiel weist das Garten- und/oder Forstgerät 10 ein Klemmelement 21 und eine Schraube 22 auf, mittels welcher die Öse 40 mit dem Trägerelement verbunden ist. Der Ösenschwenkabschnitt 41 und das Klemmelement 21 wirken derart zusammen, dass eine Anlenkung gebildet ist, insbesondere ein Schwenkgelenk 23. Das Schwenkgelenk 23 ermöglicht die Verstellung, insbesondere eine Schwenkbewegung der Öse 40 zwischen der Einbindelage EL und der Verstaulage VL, insbesondere mit einem Schwenkwinkel von mindestens 90°. Im gezeigten Ausführungsbeispiel ist eine Verstellachse, insbesondere eine Schwenkachse SCA, parallel zu der Ebene E.

Des Weiteren weist das Trägerelement 20 ein Feststellelement 25 auf. Das Feststellelement 25 ist dazu ausgebildet, die Öse 40 in der Einbindelage EL zu fixieren, insbesondere durch Verspannen und Deformieren.

Außerdem weist das Trägerelement 20 eine Griffmuschel 70 auf. Die Griffmuschel 70 umgibt die Öse 40 in der Verstaulage VL teilweise.

Fig. 16 zeigt ein weiteres erfindungsgemäßes Garten- und/oder Forstgerät 10. Das Gartenund/oder Forstgerät 10 weist ein Gerätegehäuse 60 auf, insbesondere mit einer anderen beziehungsweise ohne Gehäuseteilung wie in Fig. 1 bis 15 gezeigt. Das Gerätegehäuse 60 weist die Elementaufnahme 30 auf. Zusätzlich weist das Garten- und/oder Forstgerät 10 ein Trägersicherungselement 80 auf. Das Trägersicherungselement 80 ist zur, insbesondere axialen, Sicherung des Trägerelements 20 in der Elementaufnahme 30 gegen Lösung aus der Elementaufnahme 30 ausgebildet, insbesondere entlang der Normale N.

Im Detail ist das Trägersicherungselement 80 zur, insbesondere zerstörungsfrei, lösbaren Befestigung an dem Gerätegehäuse 60 beziehungsweise der Elementaufnahme 30 ausgebildet. Des Weiteren ist das Trägerelement 20 durch mindestens einen Formschluss mit der Elementaufnahme 30 und/oder dem, insbesondere befestigten, Trägersicherungselement 80 gegen Lösung aus der Elementaufnahme 30 gesichert. Das Trägersicherungselement 80 kann von dem Gerätegehäuse 60 beziehungsweise der Elementaufnahme 30 gelöst werden. Dies ermöglicht ein Lösen beziehungsweise ein Entnehmen beziehungsweise ein Herausschieben des Trägerelements 20 aus der Elementaufnahme 30 heraus, insbesondere in Richtung des in Fig. 16 gezeigten Pfeils, und somit zur Drehung freizugeben oder ein einfaches Einsetzen beziehungsweise Einschieben des Trägerelements, insbesondere in der gewünschten Drehstellung, in die Elementaufnahme 30 hinein.

Wie die gezeigten und oben erläuterten Ausführungsbeispiele deutlich machen, stellt die Erfindung ein Garten- und/oder Forstgeräts bereit, das verbesserte Eigenschaften aufweist und somit benutzerfreundlicher ist.

## Patentansprüche

1. Garten- und/oder Forstgerät (10), aufweisend:
- ein Trägerelement (20), das eine Öse (40) trägt, die zur Einbindung eines Gerätesicherungselements (50) ausgebildet ist, **dadurch gekennzeichnet, dass** das Garten- und/oder Forstgerät (10) aufweist:
- eine Elementaufnahme (30),
- wobei das Trägerelement (20) und die Elementaufnahme (30) dazu ausgebildet sind, dass das Trägerelement (20) entweder in einer ersten Drehstellung (DS1) oder in einer von der ersten verschiedenen, zweiten Drehstellung (DS2) in der Elementaufnahme (30) aufgenommen ist und durch einen Formschluss mit der Elementaufnahme (30) gegen Drehung gesichert ist.

2. Garten- und/oder Forstgerät (10) nach Anspruch 1,
- wobei die erste Drehstellung (DS1) und die zweite Drehstellung (DS2) durch einen Drehwinkel von mindestens 45° verschieden sind.

3. Garten- und/oder Forstgerät (10) nach einem der vorhergehenden Ansprüche,
- wobei eine Grundform der Elementaufnahme (30) und/oder des Trägerelements (20) drehsymmetrisch und/oder punktsymmetrisch und/oder achsensymmetrisch ist.

4. Garten- und/oder Forstgerät (10) nach einem der vorhergehenden Ansprüche,
- wobei das Trägerelement (20) und die Elementaufnahme (30) zur Verbindung durch einen Formschluss ausgebildet sind.

5. Garten- und/oder Forstgerät (10) nach einem der vorhergehenden Ansprüche,
- wobei die Elementaufnahme (30) eine Nut (33) aufweist, die dazu ausgebildet ist, das Trägerelement (20) aufzunehmen.

6. Garten- und/oder Forstgerät (10) nach einem der vorhergehenden Ansprüche, aufweisend:
- ein Gerätegehäuse (60) mit einem ersten Gehäuseteil (61) und einem zweiten Gehäuseteil (62),
- wobei die Elementaufnahme (30) eine erste Aufnahme (31) an dem ersten Gehäuseteil (61) und eine zweite Aufnahme (32) an dem zweiten Gehäuseteil (62) aufweist, und
- wobei das erste Gehäuseteil (61) und das zweite Gehäuseteil (62) zwischen einem geschlossenen Zustand (GZ), in welchem das Trägerelement (20) in der ersten Aufnahme (31) und der zweiten Aufnahme (32) aufgenommen ist und durch den Formschluss mit der ersten Aufnahme (31) und der zweiten Aufnahme (32) gegen Drehung gesichert ist, und einem geöffneten Zustand, in welchem die erste Aufnahme (31) oder die zweite Aufnahme (32) zur Drehung des Trägerelements (20) mit dem Trägerelement (20) keinen Formschluss aufweist, veränderbar ausgebildet sind.

7. Garten- und/oder Forstgerät (10) nach einem der vorhergehenden Ansprüche, aufweisend:
- ein Werkzeug (11), das an einer Werkzeugseite (12) des Garten- und/oder Forstgeräts (10) angeordnet ist,
- wobei die Elementaufnahme (30) an einer der Werkzeugseite (12) gegenüberliegenden Aufnahmeseite (13) des Garten- und/oder Forstgeräts (10) angeordnet ist.

8. Garten- und/oder Forstgerät (10) nach einem der vorhergehenden Ansprüche,
- wobei das Garten- und/oder Forstgerät (10) eine Säge, insbesondere eine Kettensäge, eine Schere, insbesondere eine Astschere, und/oder ein Schneider, insbesondere ein Astschneider, ist.

9. Garten- und/oder Forstgerät (10) nach einem der vorhergehenden Ansprüche,
- wobei das Trägerelement (20) und die Öse (40) zur Verstellung der Öse (40) zwischen einer Einbindelage (EL), in welcher die Öse von dem Trägerelement (20) zur Einbindung des Gerätesicherungselements (50) absteht, und einer Verstaulage (VL), in welcher die Öse an dem Trägerelement (20) anliegt, ausgebildet sind.

10. Garten- und/oder Forstgerät (10) nach Anspruch 9,
- wobei das Trägerelement (20) ein Feststellelement (25) aufweist, das dazu ausgebildet ist, die Öse (40) in der Einbindelage (EL) zu fixieren.

11. Garten- und/oder Forstgerät (10) nach einem der vorhergehenden Ansprüche 9 bis 10,
- wobei das Trägerelement (20) eine Griffmuschel (70) aufweist, welche die Öse (40) in der Verstaulage (VL) zumindest teilweise umgibt.

## Claims

1. Gardening and/or forestry apparatus (10), comprising:
- a support element (20) supporting an eyelet (40) which is configured to incorporate an apparatus securing element (50),
**characterized in that** the gardening and/or forestry apparatus (10) comprises:
- an element receiving device (30),
- wherein the support element (20) and the element receiving device (30) are configured to receive the support element (20) in the element receiving device (30) either in a first rotational position (DS1) or in a second rotational position (DS2) differing from the first rotational position and to secure the support element (20) against rotation by form-fitting to the element receiving device (30).

2. Gardening and/or forestry apparatus (10) according to claim 1,
- wherein the first rotational position (DS1) and the second rotational position (DS2) differ by an angle of rotation of at least 45°.

3. Gardening and/or forestry apparatus (10) according to any of the preceding claims,
- wherein a basic shape of the element receiving device (30) and/or of the support element (20) present rotational symmetry and/or point symmetry and/or axial symmetry.

4. Gardening and/or forestry apparatus (10) according to any of the preceding claims,
- wherein the support element (20) and the element receiving device (30) are configured for connection in a form-fitting manner.

5. Gardening and/or forestry apparatus (10) according to any of the preceding claims,
- wherein the element receiving device (30) includes a groove (33) which is configured to receive the support element (20).

6. Gardening and/or forestry apparatus (10) according to any of the preceding claims, comprising:
- an apparatus housing (60) having a first housing part (61) and a second housing part (62),
- wherein the element receiving device (30) includes a first receiving device (31) on the first housing part (61) and a second receiving device (32) on the second housing part (62), and
- wherein the first housing part (61) and the second housing part (62) are configured to be variable between a closed condition (GZ), in which the support element (20) is received in the first receiving device (31) and the second receiving device (32) and is secured against rotation by the form-fitting to the first receiving device (31) and the second receiving device (32), and an opened condition, in which the first receiving device (31) or the second receiving device (32) are not form-fitting to the support element (20) for rotation of the support element (20).

7. Gardening and/or forestry apparatus (10) according to any of the preceding claims, comprising:
- a tool (11) which is disposed on a tool side (12) of the gardening and/or forestry apparatus (10),
- wherein the element receiving device (30) is disposed on a receiving side (13) of the gardening and/or forestry apparatus (10) opposed to the tool side (12).

8. Gardening and/or forestry apparatus (10) according to any of the preceding claims,
- wherein the gardening and/or forestry apparatus (10) includes a saw, in particular a chain saw, shears, in particular pruning shears, and/or a cutter, in particular a branch lopper.

9. Gardening and/or forestry apparatus (10) according to any of the preceding claims,
- wherein the support element (20) and the eyelet (40) are configured for displacing the eyelet (40) between an incorporating position (EL), in which the eyelet projects from the support element (20) for incorporating the apparatus securing element (50), and a stowing position (VL), in which the eyelet abuts on the support element (20).

10. Gardening and/or forestry apparatus (10) according to claim 9,
- wherein the support element (20) includes a locking member (25) which is configured to fix the eyelet (40) in the incorporating position (EL).

11. Gardening and/or forestry apparatus (10) according to any of claims 9 to 10,
- wherein the support element (20) includes a handle shell (70) which surrounds the eyelet (40) in the stowing position (VL) at least partially.

## Revendications

1. Appareil de jardinage et/ou forestier (10), comprenant :
- un élément support (20), qui porte un œillet (40), qui est configuré pour l'intégration d'un élément d'assujettissement d'appareil (50), **caractérisé en ce que** l'appareil de jardinage et/ou forestier (10) comprend :
- un logement d'élément (30),
- l'élément support (20) et le logement d'élément (30) étant configurés de telle sorte que l'élément support (20) est logé dans le logement d'élément (30) soit dans une première position de rotation (DS1), soit dans une deuxième position de rotation (DS2) différente de la première, et est assujetti contre une rotation par une complémentarité de forme avec le logement d'élément (30).

2. Appareil de jardinage et/ou forestier (10) selon la revendication 1,
- la première position de rotation (DS1) et la deuxième position de rotation (DS2) différant d'un angle de rotation d'au moins 45°.

3. Appareil de jardinage et/ou forestier (10) selon l'une quelconque des revendications précédentes,
- une forme de base du logement d'élément (30) et/ou de l'élément support (20) étant à symétrie rotationnelle et/ou à symétrie ponctuelle et/ou à symétrie axiale.

4. Appareil de jardinage et/ou forestier (10) selon l'une quelconque des revendications précédentes,
- l'élément support (20) et le logement d'élément (30) étant configurés pour être reliés par une complémentarité de forme.

5. Appareil de jardinage et/ou forestier (10) selon l'une quelconque des revendications précédentes,
- le logement d'élément (30) comprenant une rainure (33), qui est configurée pour loger l'élément support (20) .

6. Appareil de jardinage et/ou forestier (10) selon l'une quelconque des revendications précédentes, comprenant :
- un boîtier d'appareil (60) muni d'une première partie de boîtier (61) et d'une deuxième partie de boîtier (62),
- le logement d'élément (30) comprenant un premier logement (31) sur la première partie de boîtier (61) et un deuxième logement (32) sur la deuxième partie de boîtier (62), et
- la première partie de boîtier (61) et la deuxième partie de boîtier (62) étant configurées pour pouvoir être modifiées entre un état fermé (GZ), dans lequel l'élément support (20) est logé dans le premier logement (31) et le deuxième logement (32) et est assujetti contre une rotation par la complémentarité de forme avec le premier logement (31) et le deuxième logement (32), et un état ouvert, dans lequel le premier logement (31) ou le deuxième logement (32) ne présente pas de complémentarité de forme avec l'élément support (20) pour la rotation de l'élément support (20) .

7. Appareil de jardinage et/ou forestier (10) selon l'une quelconque des revendications précédentes, comprenant :
- un outil (11), qui est agencé sur un côté outil (12) de l'appareil de jardinage et/ou forestier (10),
- le logement d'élément (30) étant agencé sur un côté logement (13) de l'appareil de jardinage et/ou forestier (10), opposé au côté outil (12).

8. Appareil de jardinage et/ou forestier (10) selon l'une quelconque des revendications précédentes,
- l'appareil de jardinage et/ou forestier (10) étant une scie, notamment une tronçonneuse, une cisaille, notamment un sécateur, et/ou un dispositif de coupe, notamment un ébrancheur.

9. Appareil de jardinage et/ou forestier (10) selon l'une quelconque des revendications précédentes,
- l'élément support (20) et l'œillet (40) étant configurés pour le réglage de l'œillet (40) entre une position d'intégration (EL), dans laquelle l'œillet est éloigné de l'élément support (20) pour l'intégration de l'élément d'assujettissement d'appareil (50), et une position de rangement (VL), dans laquelle l'œillet repose sur l'élément support (20).

10. Appareil de jardinage et/ou forestier (10) selon la revendication 9,
- l'élément support (20) comprenant un élément de fixation (25), qui est configuré pour fixer l'œillet (40) dans la position d'intégration (EL).

11. Appareil de jardinage et/ou forestier (10) selon l'une quelconque des revendications 9 à 10 précédentes,
- l'élément support (20) comprenant une poignée coquille (70), qui entoure au moins partiellement l'œillet (40) dans la position de rangement (VL).
